# EUROPÄISCHE PATENTANMELDUNG

(11) **EP 3 206 213 A1**
(43) Veröffentlichungstag der Anmeldung: **16.08.2017**
(21) Anmeldenummer: 16155764.0
(22) Anmeldetag: 15.02.2016
(51) Int. Cl.: H01F 3/02, H01F 41/02, B32B 37/12, H01F 1/147

(54) **BANDDURCHLAUFVERFAHREN ZUR HERSTELLUNG EINES ZU EINEM COIL AUFGEHASPELTEN ELEKTROBANDLAMINATS**

(71) Anmelder: Voestalpine Stahl GmbH, 4020 Linz (AT)
(72) Erfinder: Fluch, Ronald, 4020 Linz (AT); Kern, Carina, 4020 Linz (AT)
(74) Vertreter: Jell, Friedrich

(57) **Zusammenfassung**

Es wird ein Banddurchlaufverfahren (1) zur Herstellung eines zu einem Coil (7) aufgehaspelten Elektrobandlaminats (6), bei dem mindestens ein erstes Elektroband (4) und ein zweites Elektroband (5, 500) an ihren Flachseiten (41, 51) aneinandergedrückt und zu einem Elektrobandlaminat (6) stoffschlüssig verbunden werden, welches Elektrobandlaminat (6) in einem weiteren Schritt zu einem Coil (7) aufgehaspelt wird. Um ein schnelleres und reproduzierbares Banddurchlaufverfahren zu ermöglichen wird vorgeschlagen, dass ein erstes Elektroband (4), das auf mindestens einer seiner Flachseiten (41, 42) mit einem ersten, thermisch aktivierbaren Schmelzklebelack beschichtet ist, bereitgestellt wird, und dass die erste Schmelzklebelackschicht (10) am ersten Elektroband (4) thermisch aktiviert wird, und danach die Elektrobänder (4, 5, 500) an ihren Flachseiten (41, 51), mit der aktivierten, ersten Schmelzklebelackschicht (10) zwischen diesen Flachseiten (41, 51), aneinandergedrückt werden, wobei das zweite Elektroband (5, 500) mit einer Temperatur unterhalb der Aktivierungstemperatur der ersten Schmelzklebelackschicht (10) am ersten Elektroband (4) diesem Aneinanderdrücken zugeführt wird.

## Beschreibung

Die Erfindung betrifft ein Banddurchlaufverfahren zur Herstellung eines zu einem Coil aufgehaspelten Elektrobandlaminats, bei dem mindestens ein erstes Elektroband und ein zweites Elektroband an ihren Flachseiten aneinandergedrückt und zu einem Elektrobandlaminat stoffschlüssig verbunden werden, welches Elektrobandlaminat in einem weiteren Schritt zu einem Coil aufgehaspelt wird.

Um ein Elektrobandlaminat schnell herstellen zu können, ist aus dem Stand der Technik ein Banddurchlaufverfahren bekannt (WO2007/116047A1), bei dem drei gegebenenfalls mit einem Isolierlack beschichtete Elektrobänder stoffschlüssig gefügt werden. Hierzu wird auf beiden Flachseiten des mittleren Elektrobands ein Klebstoff aufgetragen, dann die drei Elektrobänder zusammengedrückt und nachher das sich aus diesen Elektrobändern ergebende Elektrobandlaminat zu einem Coil aufgehaspelt. Nachteilig hat solch ein Beschichten mit Klebstoff im Banddurchlaufverfahren vergleichsweise sorgfältig zu erfolgen - nicht nur um ein standfestes Elektrobandlaminat herstellen, sondern auch um die Coil-Stabilität des aufgehaspelten Elektrobandlaminats gewährleisten zu können. Für diese Coil-Stabilität muss zudem noch sichergestellt werden, dass sich der aufgebrachte Klebstoff ausreichend vernetzt, bevor das Elektrobandlaminat aufgehaspelt wird. Dieser Vernetzungsgrad wird jedoch nicht unwesentlich von Parameterschwankungen im Banddurchlaufverfahren (z.B.: Bandgeschwindigkeit, Klebstoffauftrag) beeinträchtigt, was die Reproduzierbarkeit des Banddurchlaufverfahrens gefährdet, insbesondere dann, wenn vergleichsweise hohe Bandgeschwindigkeiten erforderlich sind.

Die Erfindung hat sich daher die Aufgabe gestellt, ein Banddurchlaufverfahren der eingangs geschilderten Art derart zu verändern, dass trotz vergleichsweise hoher Bandgeschwindigkeiten eine hohe Reproduzierbarkeit erreicht werden kann.

Die Erfindung löst die gestellte Aufgabe dadurch, dass ein erstes Elektroband, das auf mindestens einer seiner Flachseiten mit einem ersten, thermisch aktivierbaren Schmelzklebelack beschichtet ist, bereitgestellt wird, und dass die erste Schmelzklebelackschicht am ersten Elektroband thermisch aktiviert wird, und danach die Elektrobänder an ihren Flachseiten, mit der aktivierten, ersten Schmelzklebelackschicht zwischen diesen Flachseiten, aneinandergedrückt werden, wobei das zweite Elektroband mit einer Temperatur unterhalb der Aktivierungstemperatur der ersten Schmelzklebelackschicht am ersten Elektroband diesem Aneinanderdrücken zugeführt wird.

Wird ein erstes Elektroband, das auf mindestens einer seiner Flachseiten mit einem ersten, thermisch aktivierbaren Schmelzklebelack beschichtet ist, bereitgestellt, und wird die erste Schmelzklebelackschicht am ersten Elektroband thermisch aktiviert, und werden danach die Elektrobänder an ihren Flachseiten, mit der aktivierten, ersten Schmelzklebelackschicht zwischen diesen Flachseiten, aneinandergedrückt, so kann das erfindungsgemäße Banddurchlaufverfahren gegenüber Parameterschwankungen deutlich robuster ausgeführt werden. So kann beispielsweise auf ein Auftragen von Klebstoff im Banddurchlaufverfahren verzichtet werden, was Schichtdickenschwankungen aufgrund von Parameterschwankungen vermeiden und sohin Voraussetzungen für ein standfestes stoffschlüssiges Fügen im Banddurchlaufverfahren schaffen kann. Sohin kann es auch ausreichend sein, die Elektrobänder an ihren Flachseiten, mit der aktivierten, ersten Schmelzklebelackschicht zwischen diesen Flachseiten, lediglich aneinanderzudrücken, wodurch vergleichsweise hohe Bandgeschwindigkeiten realisierbar werden können. Ein schnelles, dennoch aber reproduzierbares Banddurchlaufverfahren kann damit geschaffen werden.
Wird zudem das zweite Elektroband mit einer Temperatur unterhalb der Aktivierungstemperatur der ersten Schmelzklebelackschicht am ersten Elektroband diesem Aneinanderdrücken zugeführt, kann durch solch ein stoffschlüssiges Verbinden von temperaturverschiedenen Elektrobändern die Abkühlphase des Elektrobandlaminats nach dem Fügen erheblich reduziert werden. Dies kann beispielsweise sicherstellen, dass vor dem Aufhaspeln des Elektrobandlaminats die stoffschlüssige Verbindung zwischen den Elektrobändern ausreichend fest ist, sodass ein Verlaufen des Coils ausgeschlossen werden kann. Trotz hoher Bandlaufgeschwindigkeiten kann das erfindungsgemäße Verfahren dennoch eine hohe Reproduzierbarkeit aufweisen. Zudem kann dies den Energieaufwand des Banddurchlaufverfahrens reduzieren, da nicht zwingend eine aktive Kühlung im Banddurchlauf erforderlich sein muss.

Im Allgemeinen wird darauf hingewiesen, dass unter Schmelzklebelack beispielsweise Backlack auf Polyvinylbutyralbasis, Polyamide, modifizierte Polyamide, modifizierte Polyester oder auf Epoxidharzbasis verstanden werden kann. Im Allgemeinen wird weiter erwähnt, dass unter thermischer Aktivierung der Schmelzklebelackschicht sowohl eine Verflüssigung einer thermoplastischen Klebstoffschicht, als auch eine chemische Vernetzung der Schichten verstanden werden kann. Zudem wird erwähnt, dass unter einem Coil ein aufgewickeltes Band bzw. Laminat verstanden werden kann.

Wird das zweite Elektroband, Umgebungstemperatur aufweisend, dem Aneinanderdrücken zugeführt, kann diese zur raschen Temperaturabnahme am Elektrobandlaminat führen, was das Banddurchlaufverfahren beschleunigen kann. Zudem kann diese rasche Abkühlung auch einer abrupten Phasenumwandlung in der aktivierten, ersten Schmelzklebelackschicht förderlich sein, was die stoffschlüssige Verbindung verbessern und damit das Banddurchlaufverfahren standfester machen kann. Zudem kann vorteilhafter Weise ein aktives Erwärmen des zweiten Elektroblechs entfallen. Vorteilhaft kann sein, wenn diese Umgebungstemperatur im Bereich von 10 bis 75°C (Grad Celsius) liegt.

Wird das erste Elektroband, zumindest auf die Aktivierungstemperatur der ersten Schmelzklebelackschicht erwärmt, dem Aneinanderdrücken zugeführt, kann die thermische Aktivierung der ersten Schmelzklebelackschicht indirekt mit Hilfe der Banderwärmung erfolgen. Dadurch ist es möglich, ein lokales Überhitzen der zu aktivierenden Schmelzklebelackschicht und somit eine Zerstörung der Klebeeigenschaften standfest zu vermeiden. Das erfindungsgemäße Banddurchlaufverfahren kann auf diese Weise zuverlässiger angewandt werden.

Das Banddurchlaufverfahren kann zudem effizienter und schneller gestaltet werden, wenn die erste Schmelzklebelackschicht des ersten Elektrobands auf 150 bis 200°C (Grad Celsius) erwärmt und damit thermisch aktiviert wird. Dadurch ist zudem sicherstellbar, dass die Temperatur der ersten Schmelzklebelackschicht ausreichend hoch ist, um sowohl die erste Schmelzklebelackschicht als auch beim Aneinanderdrücken die zweite Schmelzklebelackschicht, falls diese am zweiten Elektroband vorgesehen ist, thermisch zu aktivieren.

Wird das zweite Elektroband mit einer, mit einem zweiten, thermisch aktivierbaren Schmelzklebelack beschichteten Flachseite bereitgestellt, wobei sich beim Aneinanderdrücken der Elektrobänder die zweite Schmelzklebelackschicht auf jener Flachseite des zweiten Elektrobands befindet, die der Flachseite des ersten Elektrobands mit der aktivierten Schmelzklebelackschicht abgewandt ist, kann durch die vergleichsweise hohe spezifische Wärmekapazität des zweiten Elektrobands die zweite Schmelzklebelackschicht standfest vor einer Aktivierung geschützt werden. Aufgrund des vergleichsweise raschen Temperaturausgleichs zwischen diesen Elektrobändern kann nämlich vermieden werden, dass die Temperatur der Schmelzklebelackschicht am zweiten Elektroband nicht über deren Aktivierungstemperatur steigt. Dadurch kann sichergestellt werden, dass diese Schmelzklebelackschicht für die Weiterverarbeitung des Elektrobandlaminats aktivierbar und damit diesbezüglich funktionsfähig bleibt. Das Elektrobandlaminat kann daher in derselben Art und Weise weiterverwendet werden, wie dies von Elektrobändern mit einer Schmelzklebelackschicht bekannt ist.

Um die schnelle Abkühlung des Elektrobandlaminats nach dem Aneinanderdrücken sicherzustellen, kann vorgesehen sein, dass die erste, aktivierte Schmelzklebelackschicht an die klebstofffreie Flachseite des zweiten Elektrobands angedrückt wird. Zudem kann dies zu einem abrupten Phasenübergang in der Schmelzklebelackschicht führen, wodurch eine schnelle und zuverlässige Verfestigung der Verbindung gewährleistet werden kann. Die Reproduzierbarkeit des Banddurchlaufverfahrens kann dadurch weiter erhöht werden.

Die stoffschlüssige Verbindung zwischen den Elektroblechen kann verbessert werden, wenn die Flachseite des zweiten Elektrobands chemisch vorbehandelt und die erste, aktivierte Schmelzklebelackschicht an diese vorbehandelte Flachseite des zweiten Elektrobands angedrückt wird. Eine derartige chemische Vorbehandlung kann beispielsweise eine Konversationsschicht ausbilden, um so das Anbinden der aktivierten Schmelzklebelackschicht zu verbessen. Solch eine Vorbehandlung kann sich insbesondere dann auszeichnen, wenn beim Andrücken der beiden Elektrobänder eine vergleichsweise hohe Temperaturdifferenz zwischen den Elektrobändern besteht und die aktivierte Schmelzklebelackschicht vergleichsweise schnell abbinden muss. Mit Hilfe der Vorbehandlungsschicht kann trotzdem eine ausreichende stoffschlüssige Verbindung zwischen Schmelzklebelackschicht und der vorbehandelten Flachseite des zweiten Elektrobands sichergestellt werden, was die Reproduzierbarkeit des Banddurchlaufverfahrens förderlich sein kann.

Weist dass das zweite Elektroband auf der, dem ersten Elektroband zugewandten Flachseite ebenfalls eine Schmelzklebelackschicht auf, die durch die Temperatur der ersten Schmelzklebelackschicht thermisch aktiviert wird, kann eine besonders homogene Verschmelzung der Schmelzklebelackschichten an den beiden Elektrobändern erreicht werden - so ist die stoffschlüssige Verbindung weiter verbesserbar, womit die Reproduzierbarkeit des erfindungsgemäßen Banddurchlaufverfahrens weiter erhöht werden kann.

Wird die Schmelzklebelackschicht des zweiten Elektrobands auf seiner, dem ersten Elektroband zugewandte Flachseite während dem Aneinanderdrücken thermisch aktiviert, kann dies in erster Linie die Handhabung des Banddurchlaufverfahrens weiter vereinfachen, da keine weiteren Maßnahmen im Banddurchlaufverfahren zur Aktivierung der zweiten Schmelzklebelackschicht erforderlich sind. Zudem kann dabei sichergestellt werden, dass die Schmelzklebelackschicht nur für eine vergleichsweise kurze Zeitspanne thermisch aktiviert wird, was dem raschen Abkühlen des Elektrobandlaminats nach dem Aneinanderdrücken der Elektrobänder förderlich sein kann.

Die elektrische Isolation zwischen den Elektrobändern kann erhöht werden, wenn den Schmelzklebelackschichten auf den einander zugewandten Flachseiten der Elektrobänder Füllstoffe mit einer Partikelgröße von 1 bis 5 µm zugeführt werden. Zudem kann dies die mechanische Festigkeit des Elektrobandlaminats verbessern.

Wirkt auf die Elektrobänder bei deren Aneinanderdrücken eine Druckbelastung, beispielsweise durch Verwendung von Andruckwalzen, von mindestens 17 N/cm, kann dies die stoffschlüssige Verbindung zwischen den Elektrobändern sicherstellen und damit die Reproduzierbarkeit des Banddurchlaufverfahrens in der Herstellung eines standfesten Elektrobandlaminats weiter verbessern.

Das erfindungsgemäße Banddurchlaufverfahren kann sich insbesondere durch die Verwendung von Backlack als Schmelzklebelack auszeichnen. Vorzugsweise kann sich Backlack auf Epoxidharzbasis hierfür bewähren. Des Weiteren wird im Allgemeinen erwähnt, dass die Aktivierungstemperatur der Schmelzklebelacke und/oder die Schmelzklebelacke der Elektrobänder gleich sein können.

In den Figuren ist beispielsweise der Erfindungsgegenstand anhand von Ausführungsvarianten näher dargestellt. Es zeigen
- Fig. 1: eine schematische Ansicht auf eine Vorrichtung zur Herstellung eines zu einem Coil aufgehaspelten Elektrobandlaminats aus zwei Elektrobändern und
- Fig. 2 und 3: Detailansichten auf die Vorrichtung nach Fig. 1 mit verschiedenen Elektrobändern.

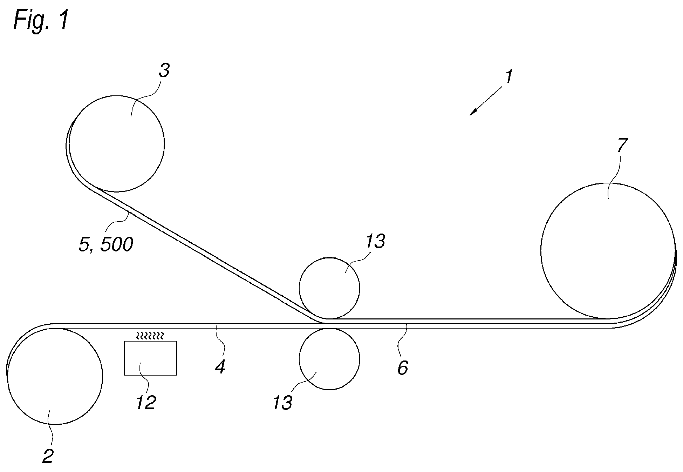

Gemäß dem in Fig. 1 schematisch dargestellten kontinuierlichen Banddurchlaufverfahren 1 ist zu erkennen, dass von zwei Coils 2, 3 jeweils ein Elektroband 4, 5, 500 abgewickelt wird.

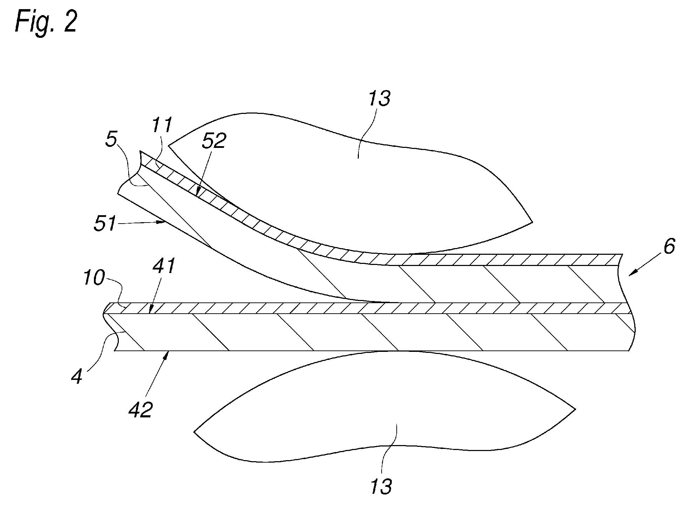

Nach Fig. 2 wird gezeigt, dass die Elektrobänder 4, 5 jeweils zwei Flachseiten 41, 42 und 51, 52 aufweisen, wobei die Flachseiten 41 und 51 des ersten und zweiten Elektrobands 4, 5 einander zugewandt werden. Das erste Elektroband 4 wird in weiterer Folge mit dem zweiten Elektroband 5 stoffschlüssig zu einem Elektrobandlaminat 6 zusammengefügt und das zusammengefügte Elektrobandlaminat 6 danach zu einem Coil 7 aufgehaspelt.

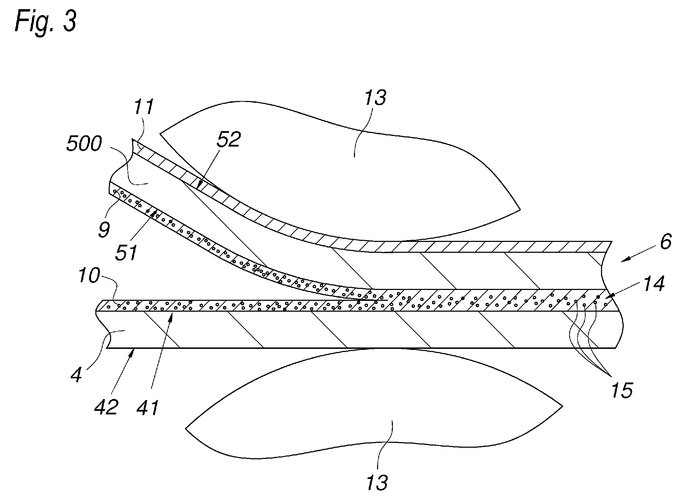

Eine vergleichsweise hohe Reproduzierbarkeit beim erfindungsgemäßen Banddurchlaufverfahren 1 wird erreicht, in dem, wie in den Figuren 2 und 3 im Detail zu sehen, das erste Elektroband 4 an seiner Flachseite 41 eine Schmelzklebelackschicht 10 aufweist bzw. ein erstes Elektroband 4, das auf mindestens einer seiner Flachseiten 41, 42 mit einem ersten, thermisch aktivierbaren Schmelzklebelack 10 beschichtet ist und für das Banddurchlaufverfahren 1 bereitgestellt wird. Zum stoffschlüssigen Fügen der Elektrobänder 4, 5, 500 braucht nur mehr dann die erste Schmelzklebelackschicht 10 des ersten Elektrobands 4 thermisch aktiviert werden und dann die Elektrobänder 4, 5 an ihren Flachseiten 41, 51 - mit der aktivierten Schmelzklebelackschicht 10 zwischen diesen Flachseiten 41, 51 - aneinandergedrückt werden, was durch die einfache Handhabbarkeit vergleichsweise hoher Bandgeschwindigkeiten im Banddurchlaufverfahren 1 zulässt. Da das zweite Elektroband 5, 500 mit einer Temperatur unterhalb der Aktivierungstemperatur der ersten Schmelzklebelackschicht 10 am ersten Elektroband 4 dem Aneinanderdrücken zugeführt wird, kann nicht nur das Abkühlen des Elektrobandlaminats 6 beschleunigt sondern auch die stoffschlüssige Verbindung ausreichend schnell vernetzt werden, um ein schnelles und standfestes Aufhaspeln des Elektrobandlaminats 6 zu einem Coil zu ermöglichen. Eine hohe Coil- bzw. Bundstabilität kann damit erreicht werden.

Es ist aber auch vorstellbar, dass vor dem Aufhaspeln eine Kühlstrecke vorgesehen ist, das Elektrobandlaminat 6 ausreichend tief zu kühlen, um die Temperatur des Elektrobandlaminats 6 beispielsweise auf unter 50°C zu senken. Damit kann beispielsweise die Coil- bzw. Bundstabilität verbessert werden.

Außerdem weist auch das zweite Elektroband 5, 500 auf seiner Flachseite 52 eine Schmelzklebelackschicht 11 auf. Erfindungsgemäß wird vor dem Aneinanderdrücken der Elektrobänder 4, 5, 500 ausschließlich die erste Schmelzklebelackschicht 10 am ersten Elektroband 4 thermisch aktiviert. Somit wird das die zweite Schmelzklebelackschicht 11 nicht erwärmt, sondern höchstens durch den Temperaturausgleich der Elektrobänder 4, 5 nach dem Zusammendrücken miterwärmt. Auf diese Weise kann sichergestellt werden, dass die zweite Schmelzklebelackschicht 11 am zweiten Elektroband 5, 500 nicht aktiviert wird und somit weiter aktivierbar und damit diesbezüglich funktionsfähig bleibt. Diese zweite Schmelzklebelackschicht 11 befindet sich nämlich erfindungsgemäß beim Aneinanderdrücken der Elektrobänder 4, 5, 500 auf jener Flachseite 52 des zweiten Elektrobands 5, 500, welche der Flachseite 41 des ersten Elektrobands 4 mit der aktivierten Schmelzklebelackschicht 10 abgewandt ist. Mit diesem Banddurchlaufverfahren wird sohin ein Elektrobandlaminat 6 erzeugt, das in gleicher Weise weiterverwendbar ist, wie dies von bekannten Elektrobändern mit einer aktivierbaren Schmelzklebelackschicht bekannt ist.

Nach Fig. 1 wird die erste Schmelzklebelackschicht 10 am ersten Elektroband 4 mit Hilfe einer Heizeinrichtung 12 thermisch aktiviert - und danach zwischen zwei Walzen 13 mit der Flachseite 51 des zweiten Elektrobands 5, 500 zusammengefügt.

Nach Fig. 2 ist die Flachseite 51 des zweiten Elektrobands 5 unbeschichtet oder mit einer nicht näher dargestellten Konversationsschicht versehen, was durch eine chemische Vorbehandlung im Banddurchlaufverfahren erfolgen kann. Diese chemische Vorbehandlung umfasste ein Auftragen von Polyvinylalkohol.

Nach Fig. 3 ist zu erkennen, dass auf der Flachseite 51 des zweiten Elektrobands 500, die der Flachseite 41 des ersten Elektrobands 4 zugewandt ist, ebenfalls eine Schmelzklebelackschicht 9 vorgesehen ist. Dies kann der stoffschlüssigen Verbindung zwischen den Elektrobändern dienlich sein. Durch den Kontakt dieser Schmelzklebelackschicht 9 mit der ersten thermisch aktivierten, heißen Schmelzklebelackschicht 10, wird die Schmelzklebelackschicht 9 am zweiten Elektroband 500 ebenfalls thermisch aktiviert und die zwei Schmelzklebelackschichten 9, 10 zu einer gemeinsamen Schmelzklebelackschicht 14 stoffschlüssig verbunden. Insbesondere erfolgt diese thermische Aktivierung der Schmelzklebelackschicht 9 am zweiten Elektroband 500 in jenem Moment, während dem die zwei Schmelzklebelackschichten 9, 10 aneinandergedrückt werden. Durch den Temperaturausgleich der Elektrobänder 4, 500 im zusammengefügten Elektrobandlaminat 6 erfolgt eine rasche Abkühlung der Schmelzklebelackschicht 14, wodurch eine rasche Weiterverarbeitung des Elektrobandlaminats 6 - und zwar ohne zusätzliche Verfahrensschritte - ermöglicht wird. Zudem wird auch hier, gleich wie im Ausführungsbeispiel nach Fig. 2, sichergestellt, dass die Schmelzklebelackschicht 11 an der Flachseite 52 des Elektrobands 500 nicht thermisch aktiviert wird und für eine spätere Aktivierung funktionsfähig bleibt. So kann unter anderem gewährleistet werden, dass das Elektrobandlaminat 6 bereits kurze Zeit bzw. unmittelbar nach dem Zusammendrücken zu einem Coil 7 aufgehaspelt werden kann.

Im nach Fig. 1 beschriebenen Banddurchlaufverfahren wurden kaltgewalzte, nicht kornorientierte Elektrobänder 4, 5, 500 im schlussgeglühten Zustand gemäß EN 10106/2007 verwendet. Die Elektrobänder 4, 5, 500 wiesen eine Nenndicke von 0,35 mm und eine Nennbreite von 1200 mm auf.
Als Schmelzklebelack für die eine Schichtdicke von 0,01 mm aufweisenden Schmelzklebelackschichten 9, 10, 11 fand der gleiche Backlack mit einer Epoxidharzbasis Verwendung. Die Aktivierungstemperatur aller Schmelzklebelackschichten 9, 10, 11 beträgt 150 bis 200°C. Den Schmelzklebelackschichten 9, 10 sind zudem Füllstoffe 15 mit einer Partikelgröße von 3,2 µm zugesetzt, um die mechanische Festigkeit der stoffschlüssigen Verbindung zu verbessern.

Das erste Elektroband 4 wurde mit der Heizeinrichtung 12 auf 150 bis 200°C erwärmt, was die Schmelzklebelackschicht 10 thermisch aktivierte.
Das zweite Elektroband 5, 500 wurde nicht aktiv erwärmt sondern damit Umgebungstemperatur von 30 °C aufweisend dem stoffschlüssigen Verbinden zugeführt.
Durch die vergleichsweise hohe Wärmekapazität des zweiten Elektrobands 5, 500 wurde seine zweite Schmelzklebelackschicht 11 mit einer weit geringeren Temperatur, nämlich ca. 70 °C belastet, was die zweite Schmelzklebelackschicht 11 vor der thermischen Aktivierung schützte und außerdem erlaubte, das Elektroband vergleichsweise schnell wieder zu einem Coil aufzuhaspeln, vorzugweise erst dann, wenn das Elektrobandlaminat 6 eine Temperatur von kleiner 50 °C aufweist. Die Bandlaufgeschwindigkeit im Banddurchlaufverfahren betrug mehr als 20m/min.
Das erfindungsgemäß hergestellte Elektrobandlaminat 6 weist eine Dicke von ca. 0,7mm und eine Zugscherfestigkeit von 5 MPa auf.

## Patentansprüche

1. Banddurchlaufverfahren zur Herstellung eines zu einem Coil (7) aufgehaspelten Elektrobandlaminats (6), bei dem
mindestens ein erstes Elektroband (4) und ein zweites Elektroband (5, 500) an ihren Flachseiten (41, 51) aneinandergedrückt und zu einem Elektrobandlaminat (6) stoffschlüssig verbunden werden, welches Elektrobandlaminat (6) in einem weiteren Schritt zu einem Coil (7) aufgehaspelt wird,
**dadurch gekennzeichnet, dass**
ein erstes Elektroband (4), das auf mindestens einer seiner Flachseiten (41, 42) mit einem ersten, thermisch aktivierbaren Schmelzklebelack beschichtet ist, bereitgestellt wird, und dass
die erste Schmelzklebelackschicht (10) am ersten Elektroband (4) thermisch aktiviert wird, und danach
die Elektrobänder (4, 5, 500) an ihren Flachseiten (41, 51), mit der aktivierten, ersten Schmelzklebelackschicht (10) zwischen diesen Flachseiten (41, 51), aneinandergedrückt werden,
wobei das zweite Elektroband (5, 500) mit einer Temperatur unterhalb der Aktivierungstemperatur der ersten Schmelzklebelackschicht (10) am ersten Elektroband (4) diesem Aneinanderdrücken zugeführt wird.

2. Banddurchlaufverfahren nach Anspruch 1, **dadurch gekennzeichnet, dass** das zweite Elektroband (5, 500) Umgebungstemperatur, insbesondere 10 bis 75°C, aufweisend, dem Aneinanderdrücken zugeführt wird.

3. Banddurchlaufverfahren nach Anspruch 1 oder 2, **dadurch gekennzeichnet, dass** das erste Elektroband (4), zumindest auf die Aktivierungstemperatur der ersten Schmelzklebelackschicht (10) erwärmt, dem Aneinanderdrücken zugeführt wird.

4. Banddurchlaufverfahren nach einem der Ansprüche 1 bis 3, **dadurch gekennzeichnet, dass** die erste Schmelzklebelackschicht (10) des ersten Elektrobands (4) auf 150 bis 200°C erwärmt und damit thermisch aktiviert wird.

5. Banddurchlaufverfahren nach einem der Ansprüche 1 bis 4, **dadurch gekennzeichnet, dass** das zweite Elektroband (5, 500) mit einer, mit einem zweiten, thermisch aktivierbaren Schmelzklebelack beschichteten Flachseite (52) bereitgestellt wird, wobei sich beim Aneinanderdrücken der Elektrobänder (4, 5, 500) die zweite Schmelzklebelackschicht (11) auf jener Flachseite (52) des zweiten Elektrobands (5, 500) befindet, die der Flachseite (41) des ersten Elektrobands (4) mit der aktivierten, ersten Schmelzklebelackschicht (10) abgewandt ist.

6. Banddurchlaufverfahren nach einem der Ansprüche 1 bis 5, **dadurch gekennzeichnet, dass** die erste, aktivierte Schmelzklebelackschicht (10) an die klebstofffeie Flachseite (51) des zweiten Elektrobands (5, 500) angedrückt wird.

7. Banddurchlaufverfahren nach einem der Ansprüche 1 bis 6, **dadurch gekennzeichnet, dass** die Flachseite (51) des zweiten Elektrobands (5, 500) chemisch vorbehandelt und die aktivierte, erste Schmelzklebelackschicht (10) an diese vorbehandelte Flachseite (51) des zweiten Elektrobands (5, 500) angedrückt wird.

8. Banddurchlaufverfahren nach einem der Ansprüche 1 bis 7, **dadurch gekennzeichnet, dass** das zweite Elektroband (500) auf der, dem ersten Elektroband (4) zugewandten Flachseite (51) ebenfalls eine Schmelzklebelackschicht (9) aufweist, die durch die Temperatur der ersten Schmelzklebelackschicht (10) thermisch aktiviert wird.

9. Banddurchlaufverfahren nach Anspruch 8, **dadurch gekennzeichnet, dass** die Schmelzklebelackschicht (9) des zweiten Elektrobands (500) auf seiner, dem ersten Elektroband (4) zugewandten Flachseite (51) während dem Aneinanderdrücken thermisch aktiviert wird.

10. Banddurchlaufverfahren nach Anspruch 8 oder 9, **dadurch gekennzeichnet, dass** den Schmelzklebelackschichten (9, 10) auf den einander zugewandten Flachseiten (41, 51) der Elektrobänder (4, 500) Füllstoffe (15) mit einer Partikelgröße von 1 bis 5 µm zugeführt werden.

11. Banddurchlaufverfahren nach einem der Ansprüche 1 bis 10, **dadurch gekennzeichnet, dass** auf die Elektrobänder (4, 5, 500) bei deren Aneinanderdrücken eine Druckbelastung von mindestens 17 N/cm wirkt.

12. Banddurchlaufverfahren nach einem der Ansprüche 1 bis 11, **dadurch gekennzeichnet, dass** als Schmelzklebelack Backlack verwendet wird.
